# EUROPEAN PATENT SPECIFICATION

(11) **EP 3 722 175 B1**
(45) Date of publication and mention of the grant of the patent: **13.04.2022**
(21) Application number: 18886319.5
(22) Date of filing: 05.12.2018
(51) Int. Cl.: B60W 50/02, B60W 50/035, B60W 50/029, B60W 30/095, B60W 30/14, B60W 40/04, B60W 30/18

(54) **PERIPHERY RECOGNITION APPARATUS AND PERIPHERY RECOGNITION METHOD**
PERIPHERIEERKENNUNGSVORRICHTUNG UND PERIPHERIEERKENNUNGSVERFAHREN
DISPOSITIF ET PROCÉDÉ DE RECONNAISSANCE DE PÉRIPHÉRIE

(30) Priority: 06.12.2017 JP 2017234454
(43) Date of publication of application: 14.10.2020
(73) Proprietor: DENSO CORPORATION, Aichi-pref., 448-8661 (JP)
(72) Inventor: HIRUMA, Keigo, Kariya-city, Aich-pref., 448-8661 (JP)
(74) Representative: Winter, Brandl - Partnerschaft mbB
(86) International application number: PCT/JP2018/044779
(87) International publication number: WO 2019/111967

(56) References cited:
- EP-A1- 2 492 165
- JP-A- 2005 032 063
- JP-A- 2005 182 198
- JP-A- 2007 042 039
- JP-A- 2014 180 986
- JP-A- 2015 225 615
- JP-A- 2016 200 443
- US-A1- 2006 009 910
- US-A1- 2015 269 844
- US-A1- 2017 123 428

## Description

### TECHNICAL FIELD

The present invention relates to a periphery recognition apparatus and a periphery recognition method.

### BACKGROUND ART

Automatic traveling control or traveling assistance control in which vehicle lane change is automatically performed uses, for example, a technology of recognizing a vehicle peripheral situation including an object by detecting the object such as a vehicle that parallelly travels. For example, JP 2009 - 78 735 A shows a traveling assistance apparatus mounted on a vehicle. The traveling assistance apparatus changes a vehicle lane by moving to a position having a space where the vehicle lane change can be performed by control of the vehicle speed.

As a result of detailed studies of the inventor, a difficulty in how to continue a process of changing the vehicle lane when it is determined that an abnormality has occurred in a part of a system of the traveling assistance apparatus has been found. The system is, for example, a detector for detecting the object that is present in peripheral of the vehicle. The traveling assistance apparatus shown in JP 2009 - 78 735 A does not teach the difficulty.

In this respect, US 2017 / 0 123 428 A1 discloses a perception system for an autonomous vehicle including multiple sensors that generate a sensor filed. Two or more sensor fields of the multiple sensors may overlap such that combined sensor fields are generated, wherein these sensor fields may change due to a sensor failure and/or anomaly. Further, the perception system may determine a quantifiable measure of how it is affected by the sensor failure and/or anomaly. However, US 2017 / 0 123 428 A1 does not provide a solution for the above problem of changing a vehicle lane in case a sensor failure and/or abnormality occurs.

It is an object of one aspect of the present invention to provide a periphery recognition apparatus that estimates whether an object is present in a detection area of a detector in which an abnormality has occurred.

According to one aspect of the present invention, a periphery recognition apparatus is configured to recognize a peripheral situation of a vehicle. The periphery recognition apparatus comprises: a detection portion configured to detect an abnormality of at least a third detector among a first detector configured to detect an object in a first area that is a predetermined area adjacent to one side of the vehicle, a second detector configured to detect the object in a second area that is an area located adjacent to the one side and located on a backward side of the first area, and the third detector configured to detect the object in a third area that is an area located adjacent to the one side and located between the first area and the second area. An estimation portion is configured to perform speed control that is control of traveling speed of the vehicle and estimate whether the object is present in the third area based on information obtained from at least one of the first detector or the second detector, when the detection portion detects that the third detector is abnormal.

According such a configuration, it may be possible to estimate whether the object is present in the third area that is the area corresponding to the object detection by the third detector in which the abnormality has occurred.

Another aspect of the present invention provides a periphery recognition method performed by a periphery recognition apparatus configured to recognize a peripheral situation of a vehicle. The periphery recognition method comprises: detecting an abnormality of at least a third detector among a first detector configured to detect an object in a first area that is a predetermined area corresponding to one side of the vehicle, a second detector configured to detect the object in a second area that is an area located adjacent to the one side and located on a backward side of the first area, and the third detector configured to detect the object in a third area that is an area located adjacent to the one side and located between the first area and the second area. The method further comprises performing speed control that is control of traveling speed of the vehicle and estimating whether the object is present in the third area based on information obtained from at least one of the first detector or the second detector, when detecting that the third detector is abnormal.

According to such a method, it may be possible to estimate whether the object is present in the third area that is the area corresponding to the object detection by the third detector in which the abnormality has occurred.

### BRIEF DESCRIPTION OF DRAWINGS

FIG. 1 is a block diagram showing a vehicle configuration according to an embodiment of the present invention;
FIG. 2 is a view showing a detection area of each detector according to an embodiment of the present invention;
FIG. 3 is a flowchart showing a traveling schedule process according to an embodiment of the present invention;
FIG. 4 is a flowchart showing an estimation process to an embodiment of the present invention;
FIG. 5 is a flowchart showing a first process according to an embodiment of the present invention;
FIG. 6 is a view showing one example of a road situation of the first process according to an embodiment of the present invention;
FIG. 7 is a flowchart showing a second process according to an embodiment of the present invention;
FIG. 8 is a flowchart showing a third process according to an embodiment of the present invention;
FIG. 9 is a view showing one example of a road situation of the third process according to an embodiment of the present invention;
FIG. 10 is a flowchart showing a fourth process according to an embodiment of the present invention;
FIG. 11 is a flowchart showing a fifth process according to an embodiment of the present invention; and
FIG. 12 is a flowchart showing a monitoring process according to a modification embodiment.

### DESCRIPTION OF EMBODIMENTS

Hereinafter, embodiments of the present invention will be described with reference to the drawings.

### [1. Configuration]

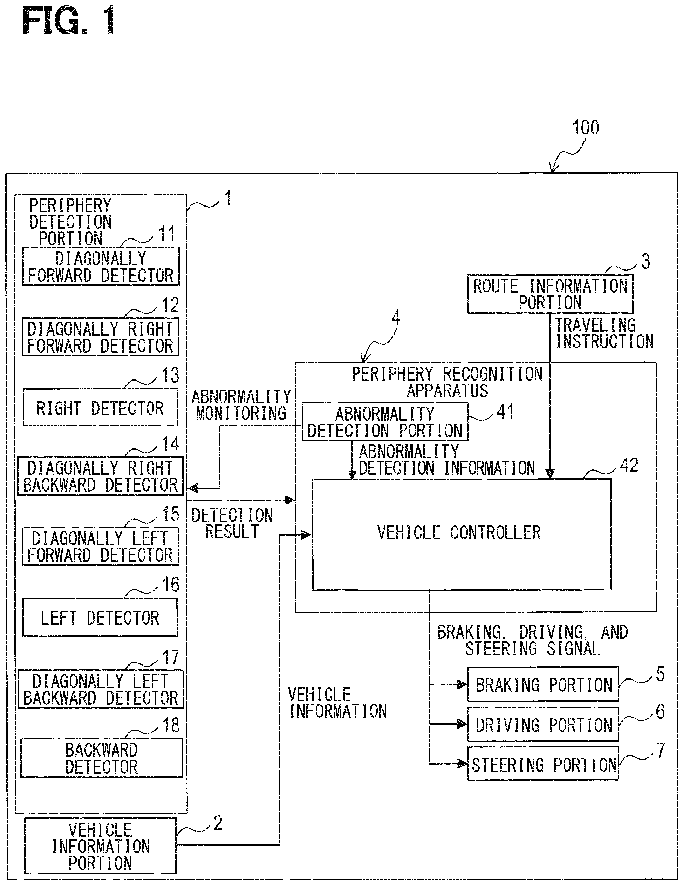

A vehicle 100 shown in FIG. 1 is an automatic traveling vehicle that automatically travels to a destination by various controls. The vehicle 100 includes a periphery detection portion 1, a vehicle information portion 2, a route information portion 3, a periphery recognition apparatus 4, a braking portion 5, a driving portion 6, and a steering portion 7. The periphery recognition apparatus 4 includes an abnormality detection portion 41 and a vehicle controller 42.

The periphery detection portion 1 is an assembly of detectors detecting an object in peripheral of the vehicle 100 and detecting the speed of the corresponding object for recognizing the peripheral situation of the vehicle 100. The periphery detection portion 1 includes a forward detector 11, a diagonally right forward detector 12, a right detector 13, a diagonally right backward detector 14, a diagonally left forward detector 15, a left detector 16, a diagonally left backward detector 17, and a backward detector 18. Each of detectors 11 to 18 is configured by a known instrument such as a camera, or a laser radar, or a sensor, and individually identifies the detected object.

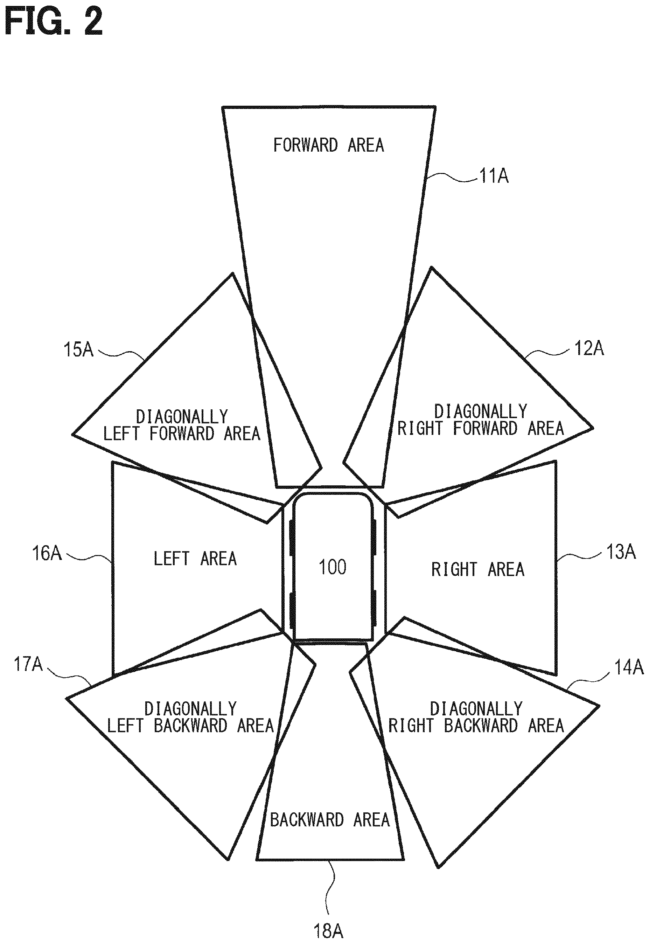

Each of areas shown in FIG. 2 is a detection area corresponding to an object detection performed by each of detectors 11 to 18. Specifically, the detection area of the forward detector 11 is a forward area 11A located in front of the vehicle 100. The detection area of the diagonally right forward detector 12 is a diagonally right forward area 12A located adjacent to a right side of the vehicle 100 and also adjacent to the forward side of the vehicle 100. The detection area of the diagonally right backward detector 14 is a diagonally right backward area 14A located adjacent to the right side of the vehicle 100 and also adjacent to a backward side of the vehicle 100. The detection area of the right detector 13 is a right area 13A that is an area located on the right side of the vehicle 100 and also located between the diagonally right forward area 12A and the diagonally right backward area 14A. The detection area of the diagonally left forward detector 15 is a diagonally left forward detection area 15A located adjacent to a left side of the vehicle 100 and also adjacent to the forward side of the vehicle 100. The detection area of the diagonally left backward detector 17 is a diagonally left backward detection area 17A located adjacent to the left side of the vehicle 100 and also adjacent to the backward side of the vehicle 100. The detection area of the left detector 16 is a left area 16A that is located on the left side of the vehicle 100 and also located between the diagonally left forward detection area 15A and the diagonally left backward detection area 17A. The detection area of the backward detector 18 is a backward area 18A located on the backward side of the vehicle 100.

The vehicle information portion 2 is an assembly of sensors that detect vehicle information that is information necessary for the traveling control of the vehicle 100. The vehicle information portion 2 includes a known sensor such as a position sensor, a vehicle speed sensor, or a yaw rate sensor that detects an angular velocity applied to around the center of gravity of the vehicle 100 during traveling. The vehicle information detected by the vehicle information portion 2 is input to the vehicle controller 42.

The route information portion 3 inputs a travelling instruction for reaching the destination such as an instruction of a traveling route or an instruction of vehicle lane change to the vehicle controller 42, by using a known navigation system.

The periphery recognition apparatus 4 is an apparatus for recognizing the periphery of the vehicle 100.

The abnormality detection portion 41 constantly monitors each of the detectors 11 to 18. When the abnormality occurs in at least one of the detectors 11 to 18, the abnormality detection portion 41 inputs abnormality detection information to the vehicle controller 42. The abnormality detection information is information indicating that the abnormality of the detector has been detected.

The vehicle controller 42 includes a known microcomputer having a CPU and a semiconductor memory such as a RAM, a ROM, or a flash memory. A function of the vehicle controller 42 is implemented by executing a program stored in a non-transitory tangible storage medium by the CPU. In this example, the semiconductor memory corresponds to the non-transitory tangible storage medium in which the program is stored. The vehicle controller 42 executes the program to execute a traveling schedule process described later. The number of microcomputers configuring the vehicle controller 42 may be one or more.

The vehicle controller 42 executes a process for automatic traveling of the vehicle 100. In particular, in the present embodiment, the process of the vehicle lane change will be described. The vehicle controller 42 recognizes the peripheral situation of the vehicle 100 based on the detection results of the object in peripheral of the vehicle 100, the detection results being input from each of the detectors 11 to 18. The vehicle controller 42 performs the traveling schedule of the vehicle 100 based on the vehicle information input from the vehicle information portion 2, the traveling instruction input from the route information portion 3, and the abnormality detection information detected by the abnormality detection portion 41, in addition to the recognition result of the peripheral situation of the vehicle 100. Performing the traveling schedule refers to determining a behavior that vehicle 100 should perform such as, for example, acceleration, deceleration, or steering. The vehicle controller 42 inputs the control instruction for the automatic traveling of the vehicle 100 to the braking portion 5, the driving portion 6, and the steering portion 7 based on the traveling schedule.

Each of the braking portion 5, the driving portion 6, and the steering portion 7 is an actuator for performing braking of the vehicle 100, driving, and steering based on the control instruction input from the vehicle controller 42.

### [2. Process]

### [2-1. Traveling schedule process]

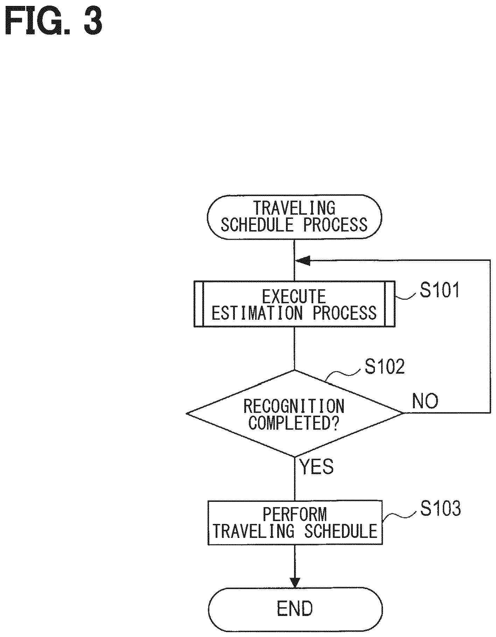

Next, a procedure of the traveling schedule process executed by the vehicle controller 42 will be described with reference to a flowchart of FIG. 3. The traveling schedule process is a series of processes for performing the traveling schedule in a situation where the abnormality has been detected in the right detector 13 or the left detector 16. More specifically, the traveling schedule process is a process executed by the vehicle controller 42 when an instruction for changing the vehicle lane to a right vehicle lane is input from the route information portion 3 in a state where the abnormality detection portion 41 has detected the abnormality in the right detector 13, or when an instruction for changing the vehicle lane to a left vehicle lane is input from the route information portion 3 in a state where the abnormality detection portion 41 has detected the abnormality in the left detector 16.

In S101, the vehicle controller 42 estimates whether the object is present in the detection area of the detector located adjacent to the side detector where the abnormality has been detected, by executing an estimation process described later. In this example, the vehicle controller 42 estimates whether the vehicle parallelly traveling is present. That is, the estimation process is a process of recognizing the peripheral situation of the vehicle 100 by estimating where the parallelly traveling vehicle is present in an undetectable area that is a detection area where the parallelly traveling vehicle cannot be detected due to occurrence of the abnormality. Specifically, in the state where the abnormality has been detected in the right detector 13, the vehicle controller 42 estimates whether the parallelly traveling vehicle is present in the right area 13A. In the state where the abnormality has been detected in the left detector 16, the vehicle controller 42 estimates whether the parallelly traveling vehicle is present in the left area 16A.

In S102, the vehicle controller 42 determines whether the recognition of the peripheral situation of the vehicle 100 has been completed in the estimation process. When determining that the recognition has been completed in S102, the vehicle controller 42 shifts the process to S103. On the other hand, when determining that the recognition has not been completed, that is, the recognition has not been finished in S102, the vehicle controller 42 returns the process to S101, and executes the estimation process again.

In S103, the vehicle controller 42 performs the traveling schedule based on the estimation process. Specifically, for example, when the vehicle controller 42 obtains the result of the estimation process and the result indicates that the parallelly traveling vehicle is present, the vehicle controller 42 performs the traveling schedule that does not include the vehicle lane change. Thereafter, the vehicle controller 42 ends the traveling schedule process, and inputs the control instruction based on the traveling schedule to the braking portion 5, the driving portion 6, and the steering portion 7.

### [2-2. Estimation process]

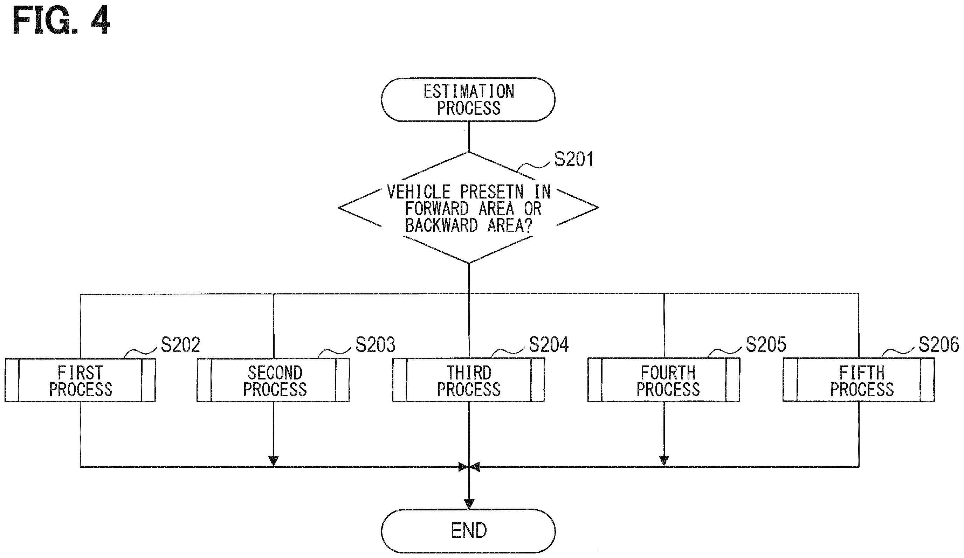

Next, the estimation process executed by the vehicle controller 42 in S101 of the traveling schedule process will be described with reference to a flowchart of FIG. 4.

In S201, the vehicle controller 42 determines whether the vehicle is present in each detection area of the forward detector located adjacent to the forward side of the detector in which the abnormality has been detected and the backward detector located adjacent to the backward side of the detector in which the abnormality has been detected, and determines whether the vehicle is present in the detection area of the detector located adjacent to the backward side of the detector in which the abnormality has been detected. Specifically, in the state where the abnormality has been detected in the right detector 13, the vehicle controller 42 determines whether a forward vehicle traveling at the position adjacent to the forward side and also the right side of the vehicle 100 is present in the diagonally right forward area 12A, and determines whether a backward vehicle traveling at the position adjacent to the backward side and also the right side of the vehicle 100 is present in the diagonally right backward area 14A. On the other hand, in the state where the abnormality has been detected in the left detector 16, the vehicle controller 42 determines whether the forward vehicle traveling at the position adjacent to the forward side and also the left side of the vehicle 100 is present in the diagonally left forward detection area 15A, and determines whether the backward vehicle traveling at the position adjacent to the backward side and also the left side of the vehicle 100 is present in the diagonally left backward detection area 17A. The vehicle controller 42 also determines the traveling speeds of the forward vehicle and the backward vehicle based on the information obtained by the periphery detection portion 1.

When determining that only the forward vehicle is present and also the speed of the forward vehicle is lower than or equal to the speed of the vehicle 100 in S201, the vehicle controller 42 shifts the process to S202. The vehicle controller 42 executes a first process described later in S202, and thereafter ends the estimation process.

When determining that only the forward vehicle is present and also the speed of the forward vehicle is higher than the speed of the vehicle 100 in S201, the vehicle controller 42 shifts the process to S203. The vehicle controller 42 executes a second process described later in S203, and thereafter ends the estimation process.

When determining that only the backward vehicle is present in S201, the vehicle controller 42 shifts the process to S204. The vehicle controller 42 executes a third process described later in S204, and thereafter ends the estimation process.

When determining that the forward vehicle and the backward vehicle are present in S201, the vehicle controller 42 shifts the process to S205. The vehicle controller 42 executes a fourth process described later in S205, and thereafter ends the estimation process.

When determining that the vehicle is not present in both of the forward area and the backward area in S201, the vehicle controller 42 shifts the process to S206. The vehicle controller 42 executes a fifth process described later in S206, and thereafter ends the estimation process.

### [2-3. First process]

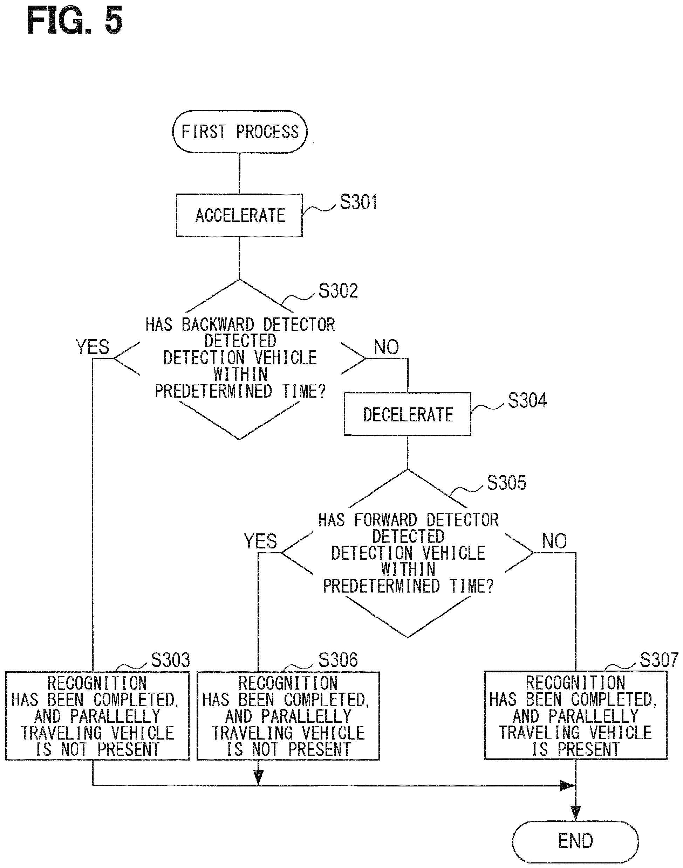

Next, the first process executed by the vehicle controller 42 in S202 of the estimation process will be described with reference to a flowchart of FIG. 5. In the following description, it is assumed that a vehicle other than the detection vehicle that is the vehicle detected in S201 of the estimation process is not detected in the forward area and the backward area unless there is a further description. Further, it is assumed that each detection area is set to a size that allows the vehicle 100 to automatically travel, and the right area 13A and the left area 16A are set to a size that does not allow the multiple vehicles to be present at the same time. Therefore, when the detection vehicle moves from the forward area or the backward area to the undetectable area, only the detection vehicle is present in the undetectable area.

In S301, the vehicle controller 42 performs acceleration control of the vehicle 100. More specifically, the vehicle controller 42 inputs the control instruction for accelerating the vehicle 100 to the driving portion 6 and the steering portion 7. At this time, by the acceleration control, the speed of the vehicle 100 is controlled to be higher than the speed of the detection vehicle determined based on the information obtained by the forward detector.

In S302, the vehicle controller 42 determines whether the backward detector has detected the detection vehicle within a predetermined time. When determining that the backward detector has detected the detection vehicle within the predetermined time in S302, the vehicle controller 42 shifts the process to S303.

In S303, the vehicle controller 42 estimates that the parallelly traveling vehicle is not present in the undetectable area, and thereby completes the recognition of the peripheral situation of the vehicle 100. Thereafter, the vehicle controller 42 ends the first process.

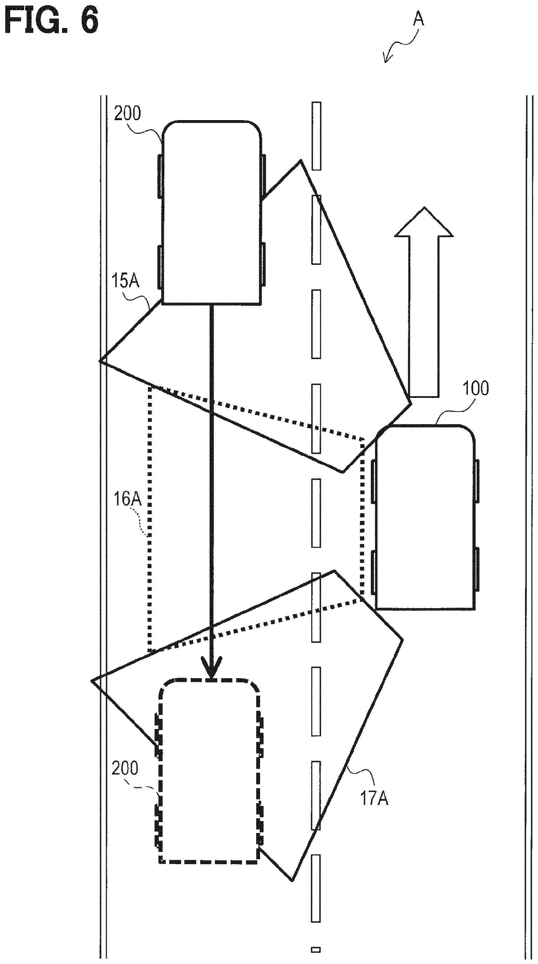

Here, the flow from S301 to S303 will be described with reference to a road situation shown in FIG. 6 as an example. On a road A, the vehicle 100 and a vehicle 200 travel. The vehicle 200 is positioned adjacent to the forward side and also the left side of the vehicle 100. At this time, the vehicle 200 is a forward vehicle traveling in the diagonally left forward detection area 15A, and is the detection vehicle. The vehicle 200 is traveling at a lower speed or the same speed as the vehicle 100. When the vehicle controller 42 determines that the vehicle 200 is present in the diagonally left forward detection area 15A and thereafter performs the acceleration control, the diagonally left backward detector 17 detects the vehicle 200 in the diagonally left backward detection area 17A within the predetermined time unless the vehicle 200 accelerates in the undetectable area. The vehicle controller 42 estimates that the parallelly traveling vehicle is not present in the undetectable area, and ends the first process. That is, the vehicle controller 42 grasps the situation of the normally recognized diagonally left forward detection area 15A and the situation of the normally recognized diagonally left backward detection area 17A before and after the acceleration. Thereby, the vehicle controller 42 estimates that the parallelly traveling vehicle is not present in the left area 16A that is the undetectable area between the diagonally left forward detection area 15A and the diagonally left backward detection area 17A.

On the other hand, in S302, when determining that the backward detector has not detected the detection vehicle within the predetermined time, the vehicle controller 42 shifts the process to S304.

In S304, the vehicle controller 42 performs deceleration control of the vehicle 100.

In S305, the vehicle controller 42 determines whether the forward detector has detected the detection vehicle within the predetermined time. In S305, when determining that the forward detector has not detected the detection vehicle within the predetermined time, the vehicle controller 42 shifts the process to S306.

In S306, the vehicle controller 42 estimates that the parallelly traveling vehicle is not present in the undetectable area, and thereby completes the recognition of the peripheral situation of the vehicle 100. For example, when, during the acceleration control of the vehicle 100 in S301, the detection vehicle enters the undetectable area and thereafter travels in parallel with the vehicle 100 at the same speed as the vehicle 100, the detection vehicle continues to be positioned in the undetectable area in a positional relation with the vehicle 100. Therefore, the vehicle controller 42 cannot detect the detection vehicle by the forward detector or the backward detector. In such a case, the vehicle controller 42 performs the deceleration control, and the vehicle 100 moves behind the detection vehicle parallelly traveling with the vehicle 100. Thereby, the forward detector is able to detect the detection vehicle. When detecting the detection vehicle within the predetermined time by the forward detector, the vehicle controller 42 estimates that the parallelly traveling vehicle is not present in the undetectable area. Thereafter, the vehicle controller 42 ends the first process.

On the other hand, in S305, when determining that the forward detector has not detected the detection vehicle within the predetermined time, the vehicle controller 42 shifts the process to S307. In S307, the vehicle controller 42 estimates that the parallelly traveling vehicle is present in the undetectable area, and thereby completes the recognition of the peripheral situation of the vehicle 100. Thereafter, the vehicle controller 42 ends the first process.

### [2-4. Second process]

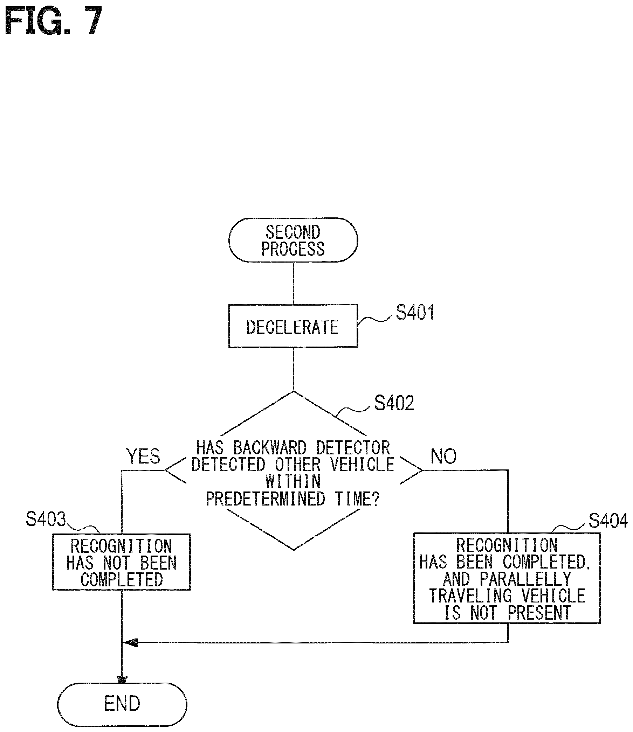

Next, the second process executed by the vehicle controller 42 in S203 of the estimation process will be described with reference to a flowchart of FIG. 7.

In S401, the vehicle controller 42 performs the deceleration control so that the speed of the vehicle 100 is lower than the speed of the detection vehicle determined based on the information obtained by the forward detector.

In S402, the vehicle controller 42 determines whether the backward detector has detected the other vehicle traveling at the position adjacent to the diagonally backward side of the vehicle 100. In S402, when determining that the backward detector has detected the othervehicle within the predetermined time, the vehicle controller42 shifts the process to S403.

In S403, the vehicle controller 42 determines that the recognition of the peripheral situation of the vehicle 100 has not been completed. Thereafter, the vehicle controller 42 ends the second process. In this case, after the estimation process ends, it is determined that the recognition of the peripheral situation of the vehicle 100 has not been completed in S102. The process returns to S101. In S201, it is determined that only the backward vehicle is present, and a third process described later is executed.

On the other hand, in S402, when determining that the backward detector has not detected the other vehicle within the predetermined time, the vehicle controller 42 shifts the process to S404.

In S404, the vehicle controller 42 estimates that the parallelly traveling vehicle is not present, and thereby completes the recognition of the peripheral situation of the vehicle 100. That is, in consideration of the situation that the detection vehicle travels at the higher speed than the vehicle 100, there are many cases where also the other vehicle travels at the higher speed than the vehicle 100 in the traveling vehicle lane in which the detection vehicle travels. Thus, for example, even when the parallelly traveling vehicle travels in the undetectable area at the start of the second process, there is a low possibility that the parallelly traveling vehicle decelerates at the same time as the time of the deceleration control of the vehicle 100 and the parallelly traveling vehicle continues to be positioned in the undetectable area. Therefore, when performing the deceleration control and detecting the detection vehicle within the predetermined time by the backward detector, the vehicle controller 42 estimates that the parallelly traveling vehicle is not present in the undetectable area. Thereafter, the vehicle controller 42 ends the second process.

### [2-5. Third process]

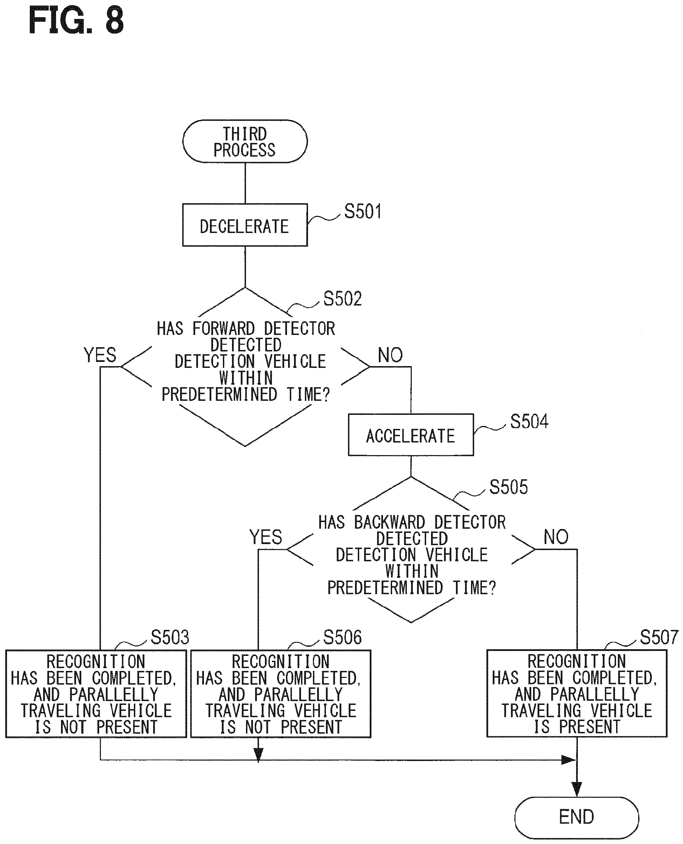

Next, the third process executed by the vehicle controller 42 in S204 of the estimation process will be described with reference to a flowchart of FIG. 8.

In S501, the vehicle controller 42 performs the deceleration control so that the speed of the vehicle 100 is lower than the speed of the detection vehicle determined based on the information obtained by the backward detector.

In S502, the vehicle controller 42 determines whether the forward detector has detected the detection vehicle within the predetermined time. In S502, when determining that the forward detector has not detected the detection vehicle within the predetermined time, the vehicle controller 42 shifts the process to S503.

In S503, similarly to S303 of the first process, the vehicle controller 42 estimates that the parallelly traveling vehicle is not present in the undetectable area, and thereby completes the recognition of the peripheral situation of the vehicle 100. Thereafter, the vehicle controller 42 ends the third process.

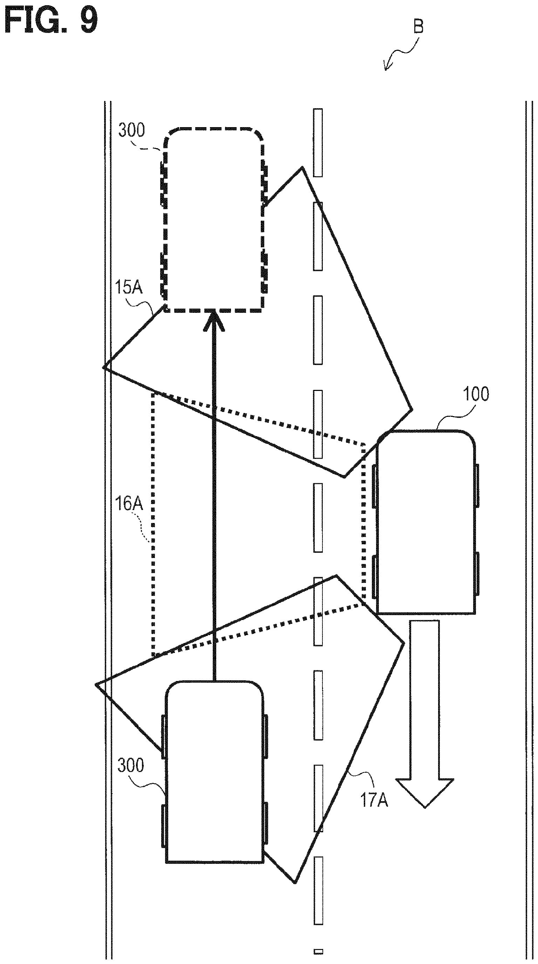

Here, the flow from S501 to S503 will be described with reference to a road situation shown in FIG. 9 as an example. On a road B, the vehicle 100 and a vehicle 300 parallelly travel. The vehicle 300 is positioned adjacent to the backward side and the left side of the vehicle 100. At this time, the vehicle 300 is a backward vehicle traveling in the diagonally left backward detection area 17A, and is the detection vehicle. When the vehicle controller 42 determines that the vehicle 300 is present in the diagonally left backward detection area 17A and thereafter performs the deceleration control, the diagonally left forward detector 15 detects the vehicle 300 in the diagonally left forward detection area 15A within the predetermined time unless the vehicle 300 decelerates in the undetectable area. The vehicle controller 42 estimates that the parallelly traveling vehicle is not present in the undetectable area, and ends the third process.

On the other hand, in S502, when determining that the forward detector has not detected the detection vehicle within the predetermined time, the vehicle controller 42 shifts the process to S504.

In S504, the vehicle controller 42 performs the acceleration control of the vehicle 100.

In S505, the vehicle controller 42 determines whether the backward detector has detected the detection vehicle within the predetermined time. In S505, when determining that the backward detector has detected the detection vehicle within the predetermined time, the vehicle controller 42 shifts the process to S506.

In S506, the vehicle controller 42 estimates that the parallelly traveling vehicle is not present in the undetectable area, and thereby completes the recognition of the peripheral situation of the vehicle 100. Thereafter, the vehicle controller 42 ends the third process.

On the other hand, in S505, when determining that the backward detector has not detected the detection vehicle within the predetermined time, the vehicle controller 42 shifts the process to S507. In S507, similarly to S307 of the first process, the vehicle controller 42 estimates that the parallelly traveling vehicle is present in the undetectable area, and thereby completes the recognition of the peripheral situation of the vehicle 100. Thereafter, the vehicle controller 42 ends the third process.

### [2-6. Fourth process]

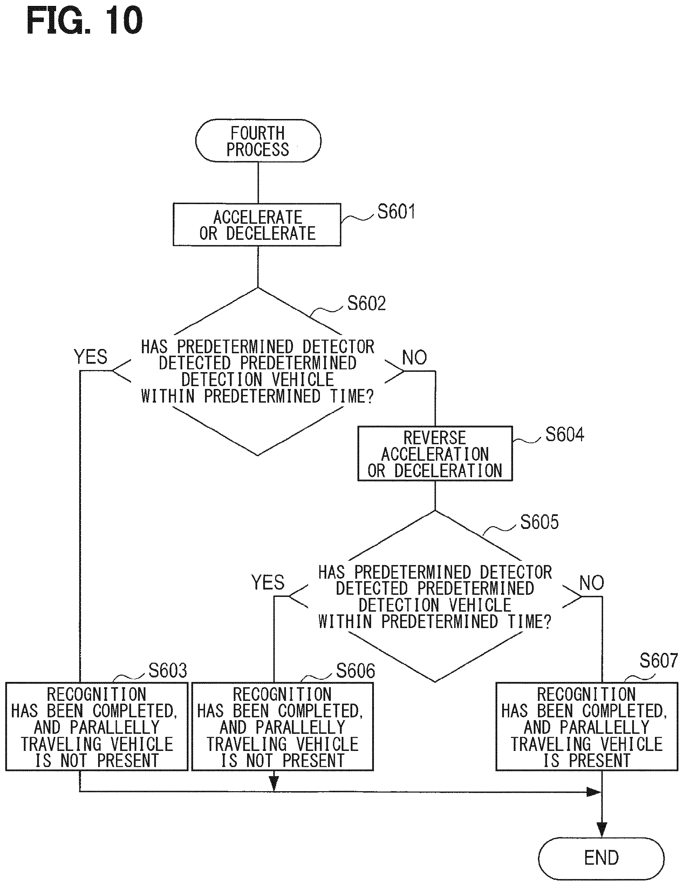

Next, the fourth process executed by the vehicle controller 42 in S205 of the estimation process will be described with reference to a flowchart of FIG. 10.

In S601, the vehicle controller42 performs the acceleration control or the deceleration control of the vehicle 100. Whether to perform the acceleration control or the deceleration control is determined in accordance with, for example, the situation in peripheral of the vehicle 100, or the like. Specifically, when performing the acceleration control of the vehicle 100, the vehicle controller 42 controls the vehicle 100 so that the speed of the vehicle 100 is higher than the speed of a first detection vehicle that is a vehicle detected as the forward vehicle. The speed of the first detection vehicle is determined based on the information obtained by the forward detector. On the other hand, when performing the deceleration control of the vehicle 100, the vehicle controller 42 controls the vehicle 100 so that the speed of the vehicle 100 is lower than the speed of a second detection vehicle that is a vehicle detected as the backward vehicle. The speed of the second detection vehicle is determined based on the information obtained by the backward detector.

In S602, the vehicle controller 42 determines whether the predetermined detector has detected the predetermined detection vehicle within the predetermined time. Specifically, when performing the acceleration control in S601, the vehicle controller 42 determines whether the backward detector has detected the first detection vehicle within a predetermined time. On the other hand, when performing the deceleration control in S601, the vehicle controller 42 determines whether the forward detector has detected the second detection vehicle within the predetermined time. In S602, when determining that the predetermined detector has detected the predetermined detection vehicle within the predetermined time, the vehicle controller 42 shifts the process to S603.

In S603, similarly to S303 of the first process, the vehicle controller 42 estimates that the parallelly traveling vehicle is not present in the undetectable area, and thereby completes the recognition of the peripheral situation of the vehicle 100. Thereafter, the vehicle controller 42 ends the fourth process.

On the other hand, in S602, when determining that the predetermined detector has not detected the predetermined detection vehicle within the predetermined time, the vehicle controller 42 shifts the process to S604.

In S604, the vehicle controller 42 reverses the performed acceleration control of the vehicle 100 in S601 or the performed deceleration control of the vehicle 100 in S601. That is, when the acceleration control is performed in S601, the deceleration control is performed. When the deceleration control is performed in S601, the acceleration control is performed.

In S605, the vehicle controller 42 determines whether the predetermined detector has detected the predetermined detection vehicle within the predetermined time. Specifically, when performing the deceleration control in S604, the vehicle controller 42 determines whether the forward detector has detected the second detection vehicle within the predetermined time. In this case, the first detection vehicle is detected by the forward detector before the second detection vehicle is detected. On the other hand, when performing the acceleration control in S604, the vehicle controller 42 determines whether the backward detector has detected the first detection vehicle within the predetermined time. In this case, the second detection vehicle is detected by the backward detector before the first detection vehicle is detected. In S605, when determining that the predetermined detector has detected the predetermined detection vehicle within the predetermined time, the vehicle controller 42 shifts the process to S606.

In S606, the vehicle controller 42 estimates that the parallelly traveling vehicle is not present in the undetectable area, and thereby completes the recognition of the peripheral situation of the vehicle 100. Thereafter, the vehicle controller 42 ends the fourth process.

On the other hand, in S605, when determining that the predetermined detector has not detected the predetermined detection vehicle within the predetermined time, the vehicle controller 42 shifts the process to S607.

In S607, the vehicle controller 42 estimates that the parallelly traveling vehicle is present in the undetectable area, and thereby completes the recognition of the peripheral situation of the vehicle 100. Thereafter, the vehicle controller 42 ends the fourth process.

### [2-7. Fifth process]

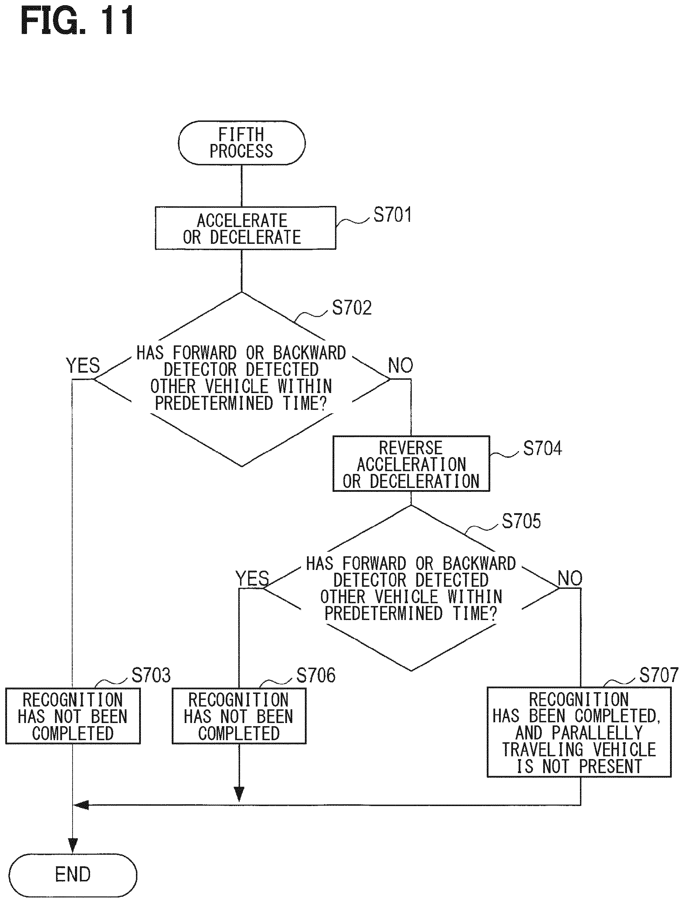

Next, the fifth process executed by the vehicle controller 42 in S206 of the estimation process will be described with reference to a flowchart of FIG. 11.

In S701, similarly to S601 of the fourth process, the vehicle controller 42 performs the acceleration control or the deceleration control of the vehicle 100.

In S702, the vehicle controller 42 determines whether at least one of the forward detector or the backward detector has newly detected the other vehicle. When determining that at least one of the forward detector or the backward detector has detected the other vehicle within the predetermined time in S702, the vehicle controller 42 shifts the process to S703.

In S703, the vehicle controller 42 determines that the recognition of the peripheral situation of the vehicle 100 has not been completed. Thereafter, the vehicle controller 42 ends the fifth process. In this case, after the estimation process ends, it is determined that the recognition of the peripheral situation of the vehicle 100 has not been completed in S102. The process returns to S101.

On the other hand, when determining that at least one of the forward detector or the backward detector has not newly detected the other vehicle within the predetermined time in S702, the vehicle controller 42 shifts the process to S704.

In S704, similarly to S604 of the fourth process, the vehicle controller 42 reverses the performed acceleration control of the vehicle 100 in S701 or the performed deceleration control of the vehicle 100 in S701.

In S705, the vehicle controller 42 determines whether at least one of the forward detector or the backward detector has detected the other vehicle within the predetermined time. When determining that at least one of the forward detector or the backward detector has detected the other vehicle within the predetermined time in S705, the vehicle controller 42 shifts the process to S706.

In S706, the vehicle controller 42 determines that the recognition of the peripheral situation of the vehicle 100 has not been completed. Thereafter, the vehicle controller 42 ends the fifth process. In this case, after the estimation process ends, it is determined that the recognition of the peripheral situation of the vehicle 100 has not been completed in S102. The process returns to S101.

On the other hand, when determining that at least one of the forward detector or the backward detector has not newly detected the other vehicle within the predetermined time in S705, the vehicle controller 42 shifts the process to S707.

In S707, similarly to S303 of the first process, the vehicle controller 42 estimates that the parallelly traveling vehicle is not present in the undetectable area, and thereby completes the recognition of the peripheral situation of the vehicle 100. Thereafter, the vehicle controller 42 ends the fifth process.

### [3. Effects]

The above-described embodiment provides the following effects.

(1a) When the abnormality detection portion 41 detects the abnormality of the right detector 13 or the left detector 16, the vehicle controller 42 performs at least one of the acceleration control or the deceleration control of the vehicle 100. The vehicle controller 42 estimates whether the parallelly traveling vehicle is present in the undetectable area based on the information that is input from the forward detector and indicates whether the forward vehicle is present and the information that is input from the backward detector and indicates whether the backward vehicle is present. The vehicle controller 42 performs the traveling schedule based on the estimation result.

According to such a configuration, when estimating that the parallelly traveling vehicle is not present in the undetectable area, the vehicle controller 42 is able to perform the traveling schedule in which the vehicle lane change is performed. Accordingly, it may be possible to continue the process of the vehicle lane change by the vehicle 100, as compared with the configuration in which the process of the vehicle lane change is not executed when the abnormality of the right detector 13 or the left detector 16 is detected. In other words, the vehicle controller 42 estimates whether the parallelly traveling vehicle is present, as a substitute for a function of each of the right detector 13 and the left detector 16 for detecting the parallelly traveling vehicle.

(1b) When both of the forward detector and the backward detector have not detected the forward vehicle and the backward vehicle during the acceleration control and the deceleration control of the vehicle 100, the vehicle controller 42 estimates that the parallelly traveling vehicle is not present in the undetectable area.

According to such a configuration, it may be possible to estimate with the high reliability that the parallelly traveling vehicle is not present in the undetectable area.

In the present embodiment, the diagonally right forward area 12A and the diagonally left forward detection area 15A may correspond to a first area. The diagonally right backward area 14A and the diagonally left backward detection area 17A may correspond to a second area. The undetectable area, the right area 13A, and the left area 16A may correspond to a third area. The diagonally right forward detector 12 and the diagonally left forward detector 15 may correspond to a first detector. The diagonally right backward detector 14 and the diagonally left backward detector 17 may correspond to a second detector. The right detector 13 and the left detector 16 may correspond to a third detector. The abnormality detection portion 41 may correspond to a detection portion. The process of S101 executed by the vehicle controller 42 may correspond to a process as an estimation portion. The process of S103 executed by the vehicle controller 42 may correspond to a process as a traveling schedule portion.

### [4. Other embodiments]

While an embodiment of the present invention has been described above, the present invention is not limited to the above embodiment and can be variously modified within the scope of the claims.

(2a) In the traveling schedule process of the embodiment described above, when a predetermined condition is satisfied, a monitoring process for monitoring whetherthe new other vehicle has entered the undetectable area may be further executed in the process of the traveling schedule process of S103. The predetermined condition is a condition that the vehicle lane change is not performed due to some reason such as a reason that guide to the destination is stopped when, in the estimation process of S101, it is estimated that the parallelly traveling vehicle is not present in the undetectable area and thereafter the recognition of the peripheral situation of the vehicle 100 has been completed. In the following description of the monitoring process, the other vehicle may be also referred to as a monitor vehicle.

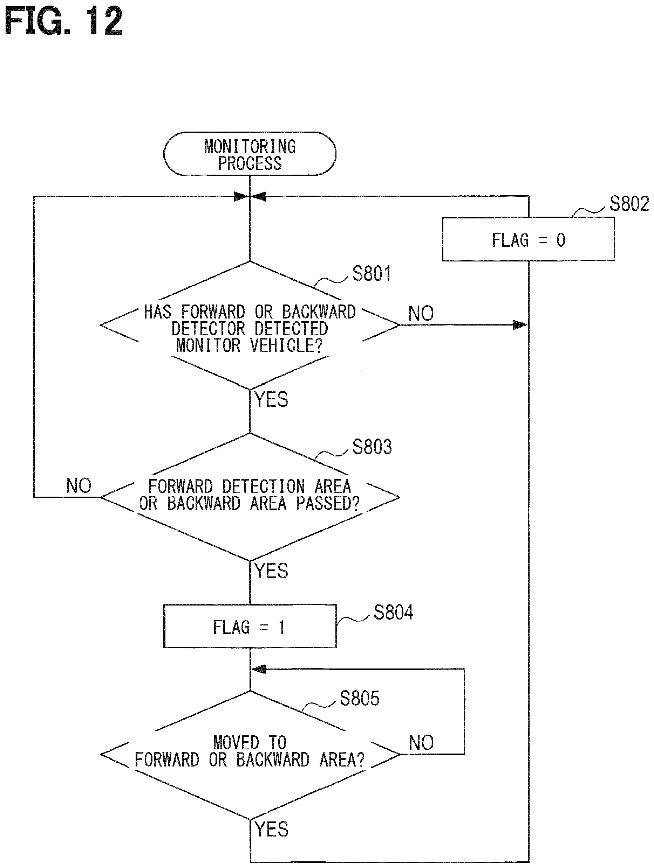

The monitoring process shown in FIG. 12 is a process executed during the process of the traveling schedule of S103.

In S801, the vehicle controller 42 determines whether at least one of the forward detector or the backward detector has detected the monitor vehicle. Specifically, when the monitor vehicle traveling at the position adjacent to the diagonally forward side of the vehicle 100 travels at the lower speed than the vehicle 100 and enters the forward area, the forward detector detects the monitoring vehicle. On the other hand, when the monitor vehicle traveling at the position adjacent to the diagonally backward side of the vehicle 100 travels at the higher speed than the vehicle 100 and enters the backward area, the backward detector detects the monitor vehicle. When determining that both of the forward detector and the backward detector have not detected the monitor vehicle in S801, the vehicle controller 42 shifts the process to S802.

In S802, the vehicle controller 42 sets a flag to "0", and returns the process to S801. The flag is a flag set when the vehicle controller 42 determines that the parallelly traveling vehicle is present in the undetectable area. At the start of the monitoring process, the flag is set to "0".

On the other hand, when determining that at least one of the forward detector or the backward detector has detected the monitor vehicle in S801, the vehicle controller 42 shifts the process to S803.

In S803, the vehicle controller 42 determines whether the monitor vehicle has passed through the forward area or the backward area. That is, the vehicle controller 42 determines whether the monitor vehicle in the forward area or the backward area has moved towards the undetectable area. When determining that the monitor vehicle has not passed through the forward area or the backward area in S803, the vehicle controller 42 returns the process to S801. On the other hand, when determining that the monitor vehicle has passed through the forward area or the backward area in S803, the vehicle controller 42 shifts the process to S804.

In S804, the vehicle controller 42 sets the flag to "1". That is, the vehicle controller 42 estimates that the parallelly traveling vehicle is present in the undetectable area. When setting the flag to "1", until the flag is set to "0" again, the vehicle controller 42 does not perform the vehicle lane change towards the undetectable area even when the route information portion 3 inputs the vehicle lane change instruction.

In S805, the vehicle controller 42 determines whether the forward detector or the backward detector has detected the monitor vehicle again. Specifically, when the monitor vehicle accelerates more than the vehicle 100, the monitor vehicle is detected by the forward detector. When the monitor vehicle decelerates more than the vehicle 100, the monitor vehicle is detected by the backward detector. When determining that the forward detector or the backward detector has detected the monitor vehicle in S805, the vehicle controller 42 shifts the process to S802. On the other hand, when determining that the forward detector or the backward detector has not detected the monitor vehicle, the vehicle controller 42 returns the process to S805.

According to such a configuration, by continuously monitoring the entry of the vehicle into the undetectable area and the exit of the vehicle from the undetectable area, it may be possible to easily estimate whether the parallelly traveling vehicle is present in the undetectable area as compared with the estimation process.

(2b) In the embodiment described above, the configuration in which the traveling schedule process is executed on a necessary condition that the instruction of the vehicle lane change is input from the route information portion 3 has been exemplified. However, the condition for executing the traveling schedule process is not limited to this. For example, the condition may be set to a condition that, regardless of whether the instruction of the vehicle lane change is input from the route information portion 3, the abnormality of the right detector 13 or the left detector 16 has been detected.

(2c) In the embodiment described above, the configuration in which two of the right detector 13 and the left detector 16 are monitored has been exemplified. In the configuration, when the abnormality is detected in at least one of the two detectors, the traveling schedule process is executed. However, for example, either the right detector 13 or the left detector 16 may be monitored. When the abnormality has been detected in the monitored detector, the traveling schedule process may be executed.

(2d) In the embodiment described above, the periphery recognition apparatus 4 used for the automatic traveling control of the vehicle 100 has been exemplified. However, the type of control using the periphery recognition apparatus is not limited to this. For example, the periphery recognition apparatus may be used for a traveling assistance control for assisting a part of the driving operation by the driver of the vehicle.

(2e) A function of one configuration element in the embodiment described above may be implemented by multiple configuration elements. Functions of multiple configuration elements may be implemented by one configuration element. A part of the configuration of the embodiment described above may be omitted. At least a part of the configuration of the embodiment described above may be added to, replaced with another configuration of the embodiment described above, or the like.

(2f) The present invention can be implemented by, in addition to the vehicle controller described above, various aspects such as a system including the vehicle controller as the configuration element, a program for causing a computer to function as the vehicle controller, or a medium storing this program.

## Claims

1. A periphery recognition apparatus (4) configured to recognize a peripheral situation of a vehicle (100), the periphery recognition apparatus comprising:
a detection portion (41) configured to detect an abnormality of at least a third detector (13, 16) among
a first detector (12, 15) configured to detect an object in a first area (12A, 15A) that is a predetermined area adjacent to one side of the vehicle,
a second detector (14, 17) configured to detect the object in a second area (14A, 17A) that is an area located adjacent to the one side and located on a backward side of the first area, and
the third detector (13, 16) configured to detect the object in a third area (13A, 16A) that is an area located adjacent to the one side and located between the first area and the second area;
**characterized in that** the periphery recognition apparatus (4) further comprises:
an estimation portion (42, S101) configured to perform speed control that is control of traveling speed of the vehicle and estimate whether the object is present in the third area based on information obtained from at least one of the first detector or the second detector, when the detection portion detects that the third detector is abnormal.

2. The periphery recognition apparatus according to claim 1, wherein
the estimation portion is configured to
perform at least deceleration control for decelerating the vehicle as the speed control, and
estimate whether the object is present in the third area based on the information obtained from the first detector.

3. The periphery recognition apparatus according to claim 1 or claim 2, wherein
the estimation portion is configured to
perform at least acceleration control for accelerating the vehicle as the speed control, and
estimate whether the object is present in the third area based on the information obtained from the second detector.

4. The periphery recognition apparatus according to any one of claims 1 to 3, wherein the estimation portion is configured to estimate that the object is not present in the third area when both of the first detector and the second detector do not detect the object while the speed control is performed.

5. The periphery recognition apparatus according to any one of claims 1 to 4, wherein the estimation portion is configured to estimate that the object is present in the third area when the object passes through either the first area or the second area after the estimation portion estimates that the object is not present in the third area.

6. The periphery recognition apparatus according to claim 5, wherein
the estimation portion is configured to estimate that the object is not present in the third area when either the first detector or the second detector detects the object after the estimation portion estimates that the object is present in the third area.

7. The periphery recognition apparatus according to any one of claims 1 to 6, further comprising:
a traveling schedule portion (42, S103) configured to perform a traveling schedule of the vehicle based on information obtained from, at least, the first detector, the second detector, and the third detector,
wherein,
when the estimation portion is configured to estimate whether the object is present in the third area, the traveling schedule portion is configured to perform the traveling schedule based on a result of estimation by the estimation portion.

8. A periphery recognition method performed by a periphery recognition apparatus (4) configured to recognize a peripheral situation of a vehicle (100), the periphery recognition method comprising:
detecting an abnormality of at least a third detector (13, 16) among
a first detector (12, 15) configured to detect an object in a first area (12A, 15A) that is a predetermined area corresponding to one side of the vehicle,
a second detector (14, 17) configured to detect the object in a second area (14A, 17A) that is an area located adjacent to the one side and located on a backward side of the first area, and
the third detector (13, 16) configured to detect the object in a third area (13A, 16A) that is an area located adjacent to the one side and located between the first area and the second area;
**characterized in that** the periphery recognition method further comprises:
performing speed control that is control of traveling speed of the vehicle and estimating whether the object is present in the third area based on information obtained from at least one of the first detector or the second detector, when detecting that the third detector is abnormal.

## Patentansprüche

1. Umgebungserkennungsvorrichtung (4), die so konfiguriert ist, dass sie eine Umgebungssituation eines Fahrzeugs (100) erkennt, wobei die Umgebungserkennungsvorrichtung aufweist:
einen Erfassungsabschnitt (41), der so konfiguriert ist, dass er eine Anormalität von mindestens einer dritten Erfassungseinheit (13, 16) unter
einer ersten Erfassungseinheit (12, 15), die so konfiguriert ist, dass sie ein Objekt in einem ersten Gebiet (12A, 15A) erfasst, das ein vorgegebenes Gebiet ist, das zu einer Seite des Fahrzeugs benachbart ist,
einer zweiten Erfassungseinheit (14, 17), die so konfiguriert ist, dass sie das Objekt in einem zweiten Gebiet (14A, 17A) erfasst, das ein Gebiet ist, das zu der einen Seite benachbart angeordnet ist und auf einer rückwärtigen Seite des ersten Gebiets angeordnet ist, und
der dritten Erfassungseinheit (13, 16), die so konfiguriert ist, dass sie das Objekt in einem dritten Gebiet (13A, 16A) erfasst, das ein Gebiet ist, das zu der einen Seite benachbart angeordnet ist und zwischen dem ersten Gebiet und dem zweiten Gebiet angeordnet ist, erfasst;
**dadurch gekennzeichnet, dass** die Umgebungserkennungsvorrichtung (4) ferner aufweist:
einen Schätzabschnitt (42, S101), der so konfiguriert ist, dass er eine Geschwindigkeitssteuerung, die eine Steuerung einer Fahrgeschwindigkeit des Fahrzeugs ist, durchführt und auf Grundlage einer Information, die von mindestens einer der Einheiten, erste Erfassungseinheit oder zweite Erfassungseinheit, erhalten wird, schätzt, ob das Objekt in dem dritten Gebiet vorhanden ist, wenn der Erfassungsabschnitt erfasst, dass die dritte Erfassungseinheit anormal ist.

2. Umgebungserkennungsvorrichtung gemäß Anspruch 1, wobei der Schätzabschnitt so konfiguriert ist, dass er:
mindestens eine Verzögerungssteuerung zum Verzögern des Fahrzeugs als die Geschwindigkeitssteuerung durchführt, und
auf Grundlage der Information, die von der ersten Erfassungseinheit erhalten wird, schätzt, ob das Objekt in dem dritten Gebiet vorhanden ist.

3. Umgebungserkennungsvorrichtung gemäß Anspruch 1 oder Anspruch 2, wobei der Schätzabschnitt so konfiguriert ist, dass er:
mindestens eine Beschleunigungssteuerung zum Beschleunigen des Fahrzeugs als die Geschwindigkeitssteuerung durchführt, und
auf Grundlage der Information, die von der zweiten Erfassungseinheit erhalten wird, schätzt, ob das Objekt in dem dritten Gebiet vorhanden ist.

4. Umgebungserkennungsvorrichtung gemäß einem der Ansprüche 1 bis 3, wobei
der Schätzabschnitt so konfiguriert ist, dass er schätzt, dass das Objekt in dem dritten Gebiet nicht vorhanden ist, wenn beide Einheiten, erste Erfassungseinheit und zweite Erfassungseinheit, das Objekt nicht erfassen, während die Geschwindigkeitssteuerung durchgeführt wird.

5. Umgebungserkennungsvorrichtung gemäß einem der Ansprüche 1 bis 4, wobei
der Schätzabschnitt so konfiguriert ist, dass er schätzt, dass das Objekt in dem dritten Gebiet vorhanden ist, wenn das Objekt entweder das erste Gebiet oder das zweite Gebiet passiert, nachdem der Schätzabschnitt schätzt, dass das Objekt in dem dritten Gebiet nicht vorhanden ist.

6. Umgebungserkennungsvorrichtung gemäß Anspruch 5, wobei
der Schätzabschnitt so konfiguriert ist, dass er schätzt, dass das Objekt in dem dritten Gebiet nicht vorhanden ist, wenn entweder die erste Erfassungseinheit oder die zweite Erfassungseinheit das Objekt erfasst, nachdem der Schätzabschnitt schätzt, dass das Objekt in dem dritten Gebiet vorhanden ist.

7. Umgebungserkennungsvorrichtung gemäß einem der Ansprüche 1 bis 6, die ferner aufweist:
eine Fahrplanabschnitt (42, S103), der so konfiguriert ist, dass er einen Fahrplan des Fahrzeugs auf Grundlage einer Information durchführt, die von mindestens einer der Einheiten, erste Erfassungseinheit, zweite Erfassungseinheit und dritte Erfassungseinheit, erhalten wird,
wobei,
wenn der Schätzabschnitt so konfiguriert ist, dass er schätzt, ob das Objekt in dem dritten Gebiet vorhanden ist, der Fahrplanabschnitt so konfiguriert ist, dass er den Fahrplan auf Grundlage eines Ergebnisses einer Schätzung durch den Schätzabschnitt durchführt.

8. Umgebungserkennungsverfahren, das durch eine Umgebungserkennungsvorrichtung (4) durchgeführt wird, die so konfiguriert ist, dass sie eine Umgebungssituation eines Fahrzeugs (100) erkennt, wobei das Umgebungserkennungsverfahren aufweist:
Erfassen einer Anormalität von mindestens einer dritten Erfassungseinheit (13, 16) unter
einer ersten Erfassungseinheit (12, 15), die so konfiguriert ist, dass sie ein Objekt in einem ersten Gebiet (12A, 15A) erfasst, das ein vorgegebenes Gebiet ist, das einer Seite des Fahrzeugs entspricht,
einer zweiten Erfassungseinheit (14, 17), die so konfiguriert ist, dass sie das Objekt in einem zweiten Gebiet (14A, 17A) erfasst, das ein Gebiet ist, das zu der einen Seite benachbart angeordnet ist und auf einer rückwärtigen Seite des ersten Gebiets angeordnet ist, und
der dritten Erfassungseinheit (13, 16), die so konfigurierst ist, dass sie das Objekt in einem dritten Gebiet (13A, 16A) erfasst, das ein Gebiet ist, das zu der einen Seite benachbart angeordnet ist und zwischen dem ersten Gebiet und dem zweiten Gebiet angeordnet ist;
**dadurch gekennzeichnet, dass** das Umgebungserkennungsverfahren ferner aufweist:
Durchführen einer Geschwindigkeitssteuerung, die eine Steuerung einer Fahrgeschwindigkeit des Fahrzeugs ist und Schätzen auf Grundlage einer Information, die von mindestens einer der Einheiten, erste Erfassungseinheit oder zweite Erfassungseinheit, erhalten wird, ob das Objekt in dem dritten Gebiet vorhanden ist, wenn erfasst wird, dass die dritte Erfassungseinheit anormal ist.

## Revendications

1. Appareil de reconnaissance de périphérie (4) configuré pour reconnaître une situation périphérique d'un véhicule (100), l'appareil de reconnaissance de périphérie comprenant :
une partie de détection (41) configurée pour détecter une anomalie d'au moins un troisième détecteur (13, 16) parmi
un premier détecteur (12, 15) configuré pour détecter un objet dans une première zone (12A, 15A) qui est une zone prédéterminée adjacente à un côté du véhicule,
un deuxième détecteur (14, 17) configuré pour détecter l'objet dans une deuxième zone (14A, 17A) qui est une zone située de manière adjacente au premier côté et située sur un côté arrière de la première zone, et
le troisième détecteur (13, 16) configuré pour détecter l'objet dans une troisième zone (13A, 16A) qui est une zone située de manière adjacente au premier côté et située entre la première zone et la deuxième zone ;
**caractérisé en ce que** l'appareil de reconnaissance de périphérie (4) comprend en outre : une partie d'estimation (42, S101) configurée pour réaliser une commande de vitesse qui est une commande d'une vitesse de déplacement du véhicule et estimer si l'objet est présent dans la troisième zone sur la base d'informations obtenues à partir d'au moins un parmi le premier détecteur ou le deuxième détecteur, lorsque la partie de détection détecte que le troisième détecteur est anormal.

2. Appareil de reconnaissance de périphérie selon la revendication 1, dans lequel la partie d'estimation est configurée pour
réaliser au moins une commande de décélération pour décélérer le véhicule en tant que commande de vitesse, et
estimer si l'objet est présent dans la troisième zone sur la base des informations obtenues à partir du premier détecteur.

3. Appareil de reconnaissance de périphérie selon la revendication 1 ou la revendication 2, dans lequel la partie d'estimation est configurée pour réaliser au moins une commande d'accélération pour accélérer le véhicule en tant que commande de vitesse, et
estimer si l'objet est présent dans la troisième zone sur la base des informations obtenues à partir du deuxième détecteur.

4. Appareil de reconnaissance de périphérie selon l'une quelconque des revendications 1 à 3, dans lequel
la partie d'estimation est configurée pour estimer que l'objet n'est pas présent dans la troisième zone lorsqu'aucun parmi le premier détecteur et le deuxième détecteur ne détecte l'objet pendant que la commande de vitesse est réalisée.

5. Appareil de reconnaissance de périphérie selon l'une quelconque des revendications 1 à 4, dans lequel
la partie d'estimation est configurée pour estimer que l'objet est présent dans la troisième zone lorsque l'objet traverse l'une ou l'autre parmi la première zone et la deuxième zone après que la partie d'estimation a estimé que l'objet n'est pas présent dans la troisième zone.

6. Appareil de reconnaissance de périphérie selon la revendication 5, dans lequel la partie d'estimation est configurée pour estimer que l'objet n'est pas présent dans la troisième zone lorsque l'un ou l'autre parmi le premier détecteur et le deuxième détecteur détecte l'objet après que la partie d'estimation a estimé que l'objet est présent dans la troisième zone.

7. Appareil de reconnaissance de périphérie selon l'une quelconque des revendications 1 à 6, comprenant en outre :
une partie de planification de déplacement (42, S103) configurée pour réaliser une planification de déplacement du véhicule sur la base d'informations obtenues au moins à partir du premier détecteur, du deuxième détecteur et du troisième détecteur,
dans lequel,
lorsque la partie d'estimation est configurée pour estimer si l'objet est présent dans la troisième zone, la partie de planification de déplacement est configurée pour réaliser la planification de déplacement sur la base d'un résultat d'estimation par la partie d'estimation.

8. Procédé de reconnaissance de périphérie réalisé par un appareil de reconnaissance de périphérie (4) configuré pour reconnaître une situation périphérique d'un véhicule (100), le procédé de reconnaissance de périphérie comprenant :
la détection d'une anomalie d'au moins un troisième détecteur (13, 16) parmi
un premier détecteur (12, 15) configuré pour détecter un objet dans une première zone (12A, 15A) qui est une zone prédéterminée correspondant à un côté du véhicule,
un deuxième détecteur (14, 17) configuré pour détecter l'objet dans une deuxième zone (14A, 17A) qui est une zone située de manière adjacente au premier côté et située sur un côté arrière de la première zone, et
le troisième détecteur (13, 16) configuré pour détecter l'objet dans une troisième zone (13A, 16A) qui est une zone située de manière adjacente au premier côté et située entre la première zone et la deuxième zone ;
**caractérisé en ce que** le procédé de reconnaissance de périphérie comprend en outre : la réalisation d'une commande de vitesse qui est une commande de vitesse de déplacement du véhicule, et l'estimation précisant si l'objet est présent dans la troisième zone sur la base d'informations obtenues à partir d'au moins un parmi le premier détecteur ou le deuxième détecteur, lors de la détection que le troisième détecteur est anormal.
